# FASCICULE DE BREVET EUROPEEN

(11) **EP 1 483 994 B1**
(45) Date de publication et mention de la délivrance du brevet: **15.02.2006**
(21) Numéro de dépôt: 04356073.9
(22) Date de dépôt: 12.05.2004
(51) Int. Cl.: A47J 31/44, A47J 31/10

(54) **Cafetiere filtre avec distribution d'eau chaude dans le couvercle**
Filterkaffeemaschine mit Warmwasserverteilung im Deckel
Filter coffee machine with a hot water delivery system in the lid

(30) Priorité: 06.06.2003 FR 0306858
(43) Date de publication de la demande: 08.12.2004
(73) Titulaire: SEB S.A., 69130 Ecully (FR)
(72) Inventeur: Lalanne-Eygun, Jacques, 65400 Beaucens (FR)
(74) Mandataire: Kiehl, Hubert

(56) Documents cités:
- DE-U- 6 925 291
- FR-A- 2 685 861
- US-A- 4 100 394
- US-A- 4 103 603
- US-A- 4 825 759

## Description

La présente invention se rapporte au domaine technique général des machines à boissons chaudes telles que les cafetières filtre. La présente invention concerne plus particulièrement les appareils comportant un couvercle dans lequel est agencé un conduit de distribution d'eau chaude.

Il est connu du document DE 69 25 291 U de réaliser une cafetière filtre comportant un conduit de distribution d'eau chaude comprenant une première partie agencée dans un boîtier et une deuxième partie agencée dans un couvercle monté pivotant sur le boîtier. L'extrémité supérieure de la partie du conduit agencé dans le boîtier comporte un joint. La partie du conduit agencé dans le couvercle débouche au dessus du porte filtre. Cette disposition permet de faciliter la mise en place et le retrait du filtre. Toutefois, cette réalisation présente un risque de projection d'eau chaude hors de l'appareil si le couvercle est relevé lors du fonctionnement.

L'objet de la présente invention est de proposer une cafetière filtre éliminant le risque précité tout en conservant une construction simple.

Cet objet est atteint avec une cafetière filtre comportant une chaudière agencée dans un boîtier et reliée à un conduit ascendant de montée d'eau chaude muni d'un orifice de sortie d'eau chaude, un couvercle articulé sur le boîtier, une douchette agencée dans le couvercle, la douchette comportant une ouverture d'entrée amenée en communication avec l'orifice et une ouverture de sortie débouchant au dessus d'un porte filtre lorsque le couvercle occupe une position rabattue sur le boîtier, le couvercle comportant une face inférieure présentant une protubérance dans laquelle est ménagée l'ouverture d'entrée, du fait que le conduit ascendant comporte une extrémité supérieure fermée en sa partie supérieure et en ce que l'orifice débouche en regard d'une paroi latérale appartenant au boîtier. Cette disposition permet d'éviter l'inconvénient précité. Cette disposition présente une bonne sécurité, du fait que la paroi latérale jouant le rôle d'un déflecteur appartient au boîtier. Cette construction est plus sûre qu'une paroi latérale mobile appartenant au couvercle, ou qu'une paroi latérale appartenant à une pièce mobile par rapport au boîtier, qui risque plus d'être endommagée et de ne plus pouvoir remplir sa fonction. Cette construction est aussi plus simple à monter.

Selon une forme de réalisation avantageuse, la cafetière comporte un réservoir d'eau alimentant la chaudière. En alternative, la cafetière peut être reliée à une alimentation d'eau.

Le réservoir d'eau peut être agencé dans le boîtier. Avantageusement alors, le conduit ascendant peut être disposé partiellement dans le réservoir d'eau. En alternative, le réservoir d'eau peut être agencé hors du boîtier, et/ou être amovible par rapport au boîtier.

Selon une autre forme de réalisation avantageuse, le porte filtre est agencé dans le boîtier. Le porte filtre peut être solidaire du boîtier, ou être disposé dans un logement de porte filtre ménagé dans le boîtier. A titre de variante, le porte filtre peut être agencé hors du boîtier.

Avantageusement, le conduit ascendant présente une paroi interne supérieure inclinée vers le bas en direction de l'orifice. Cette disposition permet de mieux diriger le jet d'eau chaude issu du conduit ascendant.

Avantageusement encore l'extrémité supérieure du conduit ascendant se situe au niveau d'une paroi supérieure du boîtier. Cette disposition facilite la connexion avec la douchette agencée dans le couvercle, tout en évitant la présence d'une aspérité sur la paroi supérieure du boîtier.

Avantageusement encore, pour une meilleure étanchéité, la protubérance comporte un joint à lèvres agencé autour de l'ouverture d'entrée et coiffant le sommet du conduit ascendant comportant ledit orifice, lorsque le couvercle occupe une position rabattue sur le boîtier.

Selon une forme de construction avantageuse, le boîtier présente une face supérieure formée au moins partiellement par un support. Cette disposition permet d'obtenir une face supérieure facile à nettoyer, et/ou d'utiliser le support pour des rangements.

Selon une autre forme de construction avantageuse l'orifice est réalisé dans un capuchon solidaire du boîtier, le capuchon étant monté sur un tube de montée d'eau chaude, le capuchon et le tube de montée d'eau chaude appartenant au conduit ascendant. Cette disposition permet de faciliter la dilatation du tube de montée d'eau chaude sans affecter le boîtier.

Avantageusement alors, le capuchon peut être fixé au support.

Avantageusement un déflecteur mobile est monté contre un moyen de rappel autour de l'extrémité supérieure du conduit ascendant. Cette disposition permet d'offrir une meilleure protection contre les projections d'eau chaude lorsque le couvercle est relevé lors du fonctionnement de la cafetière.

Avantageusement alors, le déflecteur mobile peut être monté contre le moyen de rappel autour du capuchon.

Avantageusement encore, l'extrémité supérieure du déflecteur mobile se situe au niveau d'une paroi supérieure du boîtier. Cette disposition permet d'éviter de solliciter l'attention de l'utilisateur et aussi de faciliter le nettoyage de la partie supérieure du boîtier.

Selon une forme de construction, le support présente un puits dans lequel est agencé l'extrémité supérieure du conduit ascendant. Cette disposition permet de mieux protéger l'extrémité supérieure du conduit ascendant.

Avantageusement, la paroi latérale appartient au support. Notamment, la paroi latérale peut appartenir au puits.

Selon une disposition avantageuse, le capuchon comporte une paroi plongeant dans le réservoir d'eau et présentant une découpe dans laquelle coulisse une languette appartenant à un flotteur monté autour du tube de montée d'eau chaude. Cette disposition permet d'obtenir un niveau d'eau sans réaliser de paroi latérale transparente.

Selon une autre disposition avantageuse, l'orifice est agencé du côté de l'articulation du couvercle sur le boîtier. Cette disposition permet de renforcer la sécurité en évitant qu'un jet d'eau chaude se dirige vers l'utilisateur.

Selon une autre disposition avantageuse la distance entre l'orifice et la paroi latérale est inférieure à 1 cm, et de préférence inférieure à 0,7 cm. Cette disposition permet d'éviter que l'utilisateur atteigne facilement le jet d'eau chaude issu du conduit ascendant.

L'invention sera mieux comprise à l'étude d'un exemple de réalisation, pris à titre nullement limitatif, illustré dans les figures annexées dans lesquelles :
- la figure 1 est une section verticale longitudinale d'une cafetière filtre selon l'invention, le couvercle étant rabattu sur le boîtier,
- la figure 2 est une vue en perspective couvercle relevé de la partie supérieure de la cafetière filtre illustrée à la figure 1,
- la figure 3 est une section verticale transversale de la cafetière filtre illustrée aux figures 1 et 2, le couvercle étant rabattu sur le boîtier,
- la figure 4 est une vue partielle en perspective couvercle fermé d'une section transversale du couvercle de la cafetière illustrée aux figures 1 à 3,
- la figure 5 est une vue schématique partielle agrandie de la partie supérieure de la cafetière illustrée à la figure 1,
- la figure 6 représente un détail de la figure 5, avant un fonctionnement de la cafetière,
- la figure 7 représente un détail de la figure 5, lors d'un fonctionnement de la cafetière.

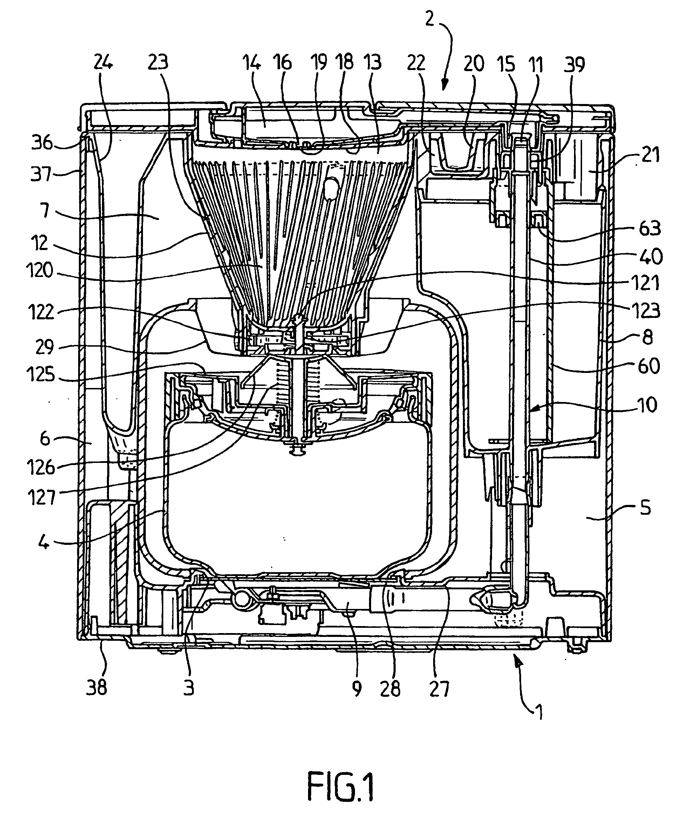

La cafetière filtre illustrée à la figure 1 comporte un boîtier 1 fermé par un couvercle 2. Le boîtier 1 présente un socle 3 prévu pour recevoir une verseuse 4. Le boîtier 1 forme un premier montant 5 et un deuxième montant 6 de part et d'autre du socle 3. Le premier montant 5 et le deuxième montant 6 sont réunis par une arche 7 au dessus du socle 3. Un réservoir d'eau 8 est agencé dans le boîtier 1. Le réservoir d'eau 8 est relié à une chaudière 9 agencée dans le boîtier 1. Le réservoir d'eau 8 est agencé partiellement dans le premier montant 5. La chaudière 9 est disposée dans le socle 3. La chaudière 9 est reliée à un conduit ascendant 10 de montée d'eau chaude.

Le conduit ascendant 10 est muni dans sa partie supérieure d'un orifice de sortie d'eau chaude 11. Le conduit ascendant 10 est disposé partiellement dans le réservoir d'eau 8. Le boîtier 1 comprend un logement de porte filtre 12 et un porte filtre 13. Le logement de porte filtre 12 est agencé dans l'arche 7. Le porte filtre 13 est disposé dans le logement de porte filtre 12. Une douchette 14 est agencée dans le couvercle 2. La douchette 14 comporte une ouverture d'entrée 15 communiquant avec une ouverture de sortie 16. Le conduit ascendant 10 est relié à l'ouverture d'entrée 15 lorsque le couvercle 2 ferme le boîtier 1. L'ouverture de sortie 16 est alors disposée au dessus du porte filtre 13.

Le porte filtre 13 comprend un cône filtre 120 muni de rainures internes, un clapet d'obturation inférieur 121 et des moyens de retenue supérieurs 122. Le clapet d'obturation inférieur 121 est associé à un moyen de rappel 123. La verseuse 4 comporte une pièce d'obturation supérieure 125 munie d'un clapet de remplissage 126 coopérant avec le clapet d'obturation inférieur 121 lorsque la verseuse 4 est en place sur le socle 3. Le clapet de remplissage 126 est associé à un autre moyen de rappel 127.

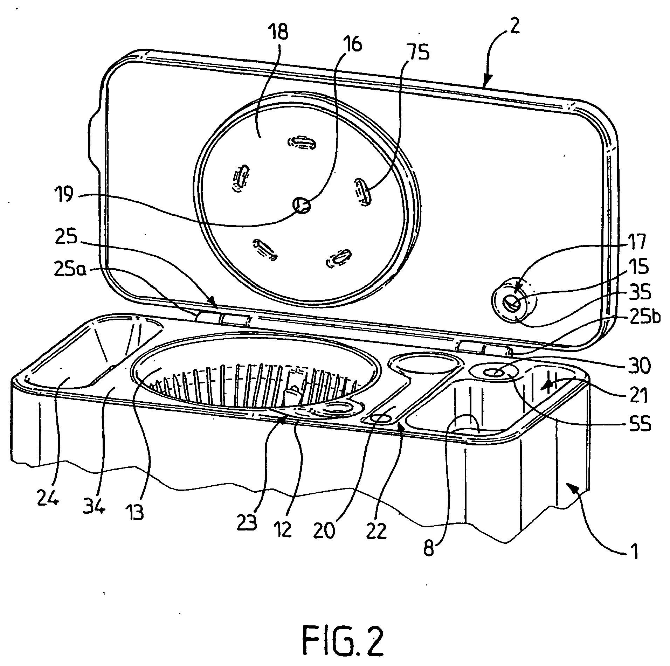

Tel que mieux visible à la figure 2, le couvercle 2 est articulé sur le boîtier 1. Le réservoir d'eau 8 présente une ouverture dans la face supérieure du boîtier 1. La face inférieure du couvercle 2 présente une protubérance inférieure 17, dans laquelle est ménagée l'ouverture d'entrée 15 de la douchette 14, et un bossage inférieur 18, comportant une ouverture 19 pour l'écoulement de l'eau chaude agencée en regard de l'ouverture de sortie 16 de la douchette 14.

Une embouchure de remplissage 21 est ménagée dans la face supérieure du boîtier 1 au dessus du réservoir d'eau 8. L'embouchure de remplissage 21 est agencée dans le premier montant 5. Un logement d'accessoire 22 est ménagé dans la face supérieure du boîtier 1 à coté de l'ouverture de remplissage 21. Le logement d'accessoire 22 est prévu pour recevoir une dosette 20. Le logement d'accessoire 22 est agencé dans l'arche 7 au dessus du réservoir d'eau 8. Un compartiment 23 pour la préparation de la boisson est ménagé dans la face supérieure du boîtier 1 à côté du logement d'accessoire 22. Le compartiment 23 forme le logement de porte filtre 12. Le compartiment 23 est agencé dans l'arche 7 au dessus de la verseuse 4. Un logement de filtres 24 est ménagé dans la face supérieure du boîtier 1 à côté du compartiment 23. Le logement de filtres 24 est agencé dans le deuxième montant 6.

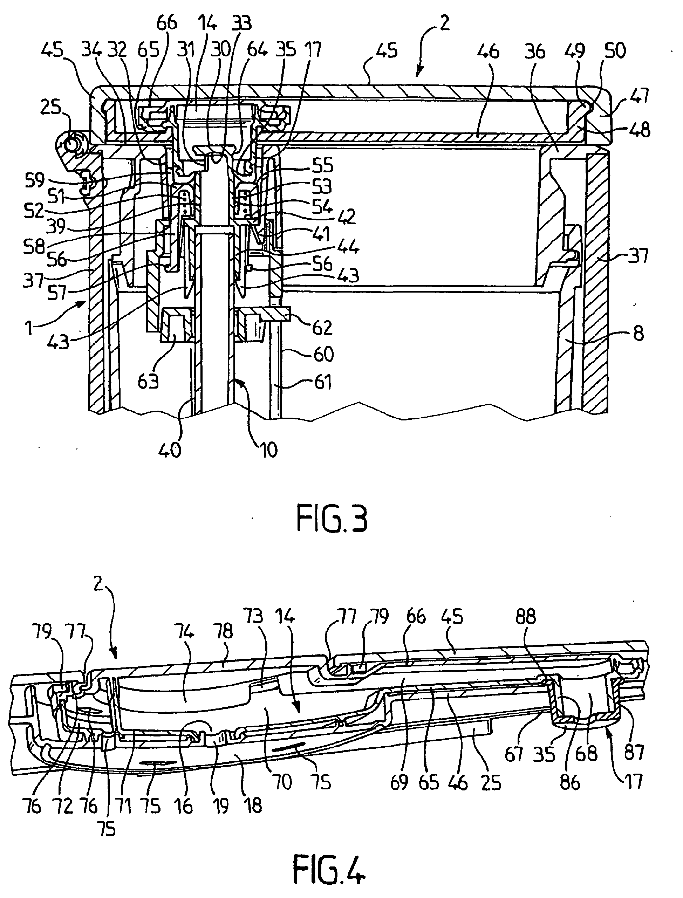

Tel que mieux visible à la figure 3, le conduit ascendant 10 comporte une extrémité supérieure 30 fermée en sa partie supérieure et un orifice 31 débouchant en regard d'une paroi latérale 32 du boîtier 1. Plus particulièrement, le conduit ascendant 10 présente une paroi interne supérieure 33 inclinée vers le bas en direction de l'orifice 31. L'orifice 31 est latéral. L'extrémité supérieure 30 du conduit ascendant 10 se situe au niveau d'une paroi supérieure 34 du boîtier 1. La paroi supérieure 34 forme une partie de la face supérieure du boîtier 1. La paroi supérieure 34 est de préférence plane. La protubérance inférieure 17 comporte un joint à lèvres 35. Le joint à lèvres 35 est agencé autour de l'ouverture d'entrée 15 de la douchette 14. Le joint à lèvres 35 forme la partie inférieure de la protubérance inférieure 17.

Le boîtier 1 présente une face supérieure formée par un support 36 auquel appartient la paroi latérale 32. L'embouchure 21, le logement d'accessoire 22, le compartiment 23 et le logement de filtres 24 sont ménagés dans le support 36. Le réservoir d'eau 8 est maintenu entre le support 36 et une pièce 27. La pièce 27 est assemblée avec le support 36 au moyen de vis, non montrées au figures. La pièce 27 sert également à maintenir un plateau chauffant 28 en contact avec la chaudière 9. Le support 36 est monté sur une jupe 37. La partie inférieure de la jupe 37 est fermée par une base 38, visible à la figure 1. La base 38 est assemblée avec la pièce 27 au moyen de vis, non montrées au figures. Une coupelle 29 est suspendue dans la paroi inférieure du support 36 au dessus du plateau chauffant 28. La coupelle 29 permet de loger la partie inférieure du logement de porte filtre 12.

L'orifice 31 du conduit ascendant 10 est réalisé dans un capuchon 39 solidaire du boîtier 1. Le capuchon 39 est monté sur un tube de montée d'eau chaude 40. Le tube de montée d'eau chaude 40 est par exemple réalisé en polypropylène. Le tube de montée d'eau chaude 40 est avantageusement issu du fond du réservoir d'eau 8. Le capuchon 39 et le tube de montée d'eau chaude 40 appartiennent au conduit ascendant 10. Le capuchon 39 est fixé au support 36. Plus particulièrement, le support 36 comporte des crochets élastiques 41, dont l'un est visible à la figure 3, venant en prise avec une collerette 42 du capuchon 39, et d'autres crochets élastiques 43, venant en prise avec une partie inférieure tubulaire 44 du capuchon 39. La partie inférieure tubulaire 44 est agencée sous la collerette 42. La partie inférieure tubulaire 44 est montée autour du tube de montée d'eau chaude 40 en ménageant un jeu d'extrémité 89. Cette disposition permet la dilatation du tube de montée d'eau chaude 40.

Le couvercle 2 présente une paroi supérieure 45 présentant une articulation 25 avec la jupe 37 du boîtier 1. Tel que mieux visible à la figure 2, l'articulation 25 comporte deux charnières 25a, 25b. Tel que mieux visible à la figure 3, l'orifice 31 est agencé du côté de l'articulation 25 du couvercle 2 sur le boîtier 1. L'articulation 25 est adjacente à l'embouchure de remplissage 21 et au logement de filtres 24.

La paroi supérieure 45 du couvercle 2 est assemblée avec une paroi inférieure 46. La paroi supérieure 45 présente un rebord périphérique inférieur 47. La paroi inférieure 46 présente un rebord périphérique supérieur 48. Des ergots 49 ménagés sur la face externe du rebord périphérique supérieur 47 sont prévus pour coopérer avec des encoches 50 ménagées sur la face interne du rebord périphérique inférieur 46.

Un déflecteur mobile 51 est monté contre un moyen de rappel 52 autour de l'extrémité supérieure du conduit ascendant 10. Plus particulièrement, le déflecteur mobile 51 est monté contre le moyen de rappel 52 autour du capuchon 39. Le moyen de rappel 52 est formé par exemple par un ressort hélicoïdal.

Le capuchon 39 présente une partie supérieure cylindrique 53 creuse communiquant avec la partie inférieure tubulaire 44. L'orifice 31 est ménagé dans la partie supérieure cylindrique 53. Le déflecteur mobile 51 comporte des languettes de guidage 54 coulissant autour de la partie supérieure cylindrique 53 du capuchon 39. Les languettes de guidage 54 sont issues d'une face supérieure 55 du déflecteur mobile 51. La largeur des languettes de guidage 54 est inférieure à la largeur de l'orifice 31. Le déflecteur mobile 51 comporte également des languettes de retenue 56 munies de crochets 57. Les languettes de retenue 56 sont montées dans des ouvertures 58 du capuchon 39.

Le support 36 présente un puits 59 dans lequel est agencée l'extrémité supérieure 30 du conduit ascendant 10. La paroi latérale 32 est ménagée dans le puits 59.

Le capuchon 39 comporte une paroi 60 plongeant dans le réservoir d'eau 8. La paroi 60 présente une découpe 61 dans laquelle coulisse une languette 62 appartenant à un flotteur 63 monté autour du tube de montée d'eau chaude 40.

La douchette 14 est logée entre la paroi inférieure 46 du couvercle 2 et la paroi supérieure 45 du couvercle 2. Tel que mieux visible à la figure 4, la douchette 14 comporte une goulotte 65 et un capot 66. La goulotte 65 comporte une partie tubulaire inférieure 86 appartenant à la protubérance inférieure 17. A cet effet, la paroi inférieure 46 du couvercle 2 présente un passage 67. Le joint à lèvres 35 comporte un montant tubulaire 87 monté autour de la partie tubulaire inférieure 86, et une collerette supérieure 88 maintenue entre la goulotte 65 et la paroi inférieure 46 du couvercle 2. Le bossage inférieur 18 appartient à la paroi inférieure 46.

La douchette 14 comprend une chambre d'entrée 68, ménagée dans la protubérance inférieure 17, débouchant latéralement à son sommet vers un conduit 69 de séparation eau/vapeur, légèrement descendant, le conduit 69 débouchant dans la paroi latérale d'une chambre de sortie 70. La chambre de sortie 70 présente dans sa partie inférieure une cuvette 71. L'ouverture 16 est agencée au centre de la cuvette 71. Une chambre d'évacuation de vapeur 72 est agencée autour de la chambre de sortie 70. A cet effet des passages de vapeur 73 sont ménagés dans la partie supérieure de la chambre de sortie 70. Plus particulièrement, les passages de vapeur 73 sont ménagés dans une paroi interne 74 du capot 66. La chambre d'évacuation de vapeur 72 présente des ouvertures d'entrée de vapeur 75 ménagées dans la paroi inférieure 46 et la goulotte 65. La chambre d'évacuation de vapeur 72 présente des ouvertures de sortie de vapeur 76 ménagées dans le capot 66. La paroi supérieure 45 présente une découpe 77 dans laquelle est agencé un bossage supérieur 78 du capot 66. Le bossage supérieur 78 et la paroi supérieure 45 sont sensiblement au même niveau. Un joint annulaire 79 est agencé entre le capot 66 et la paroi supérieure 45 autour du bossage supérieur 78, des ouvertures de sortie de vapeur 76 et de la découpe 77.

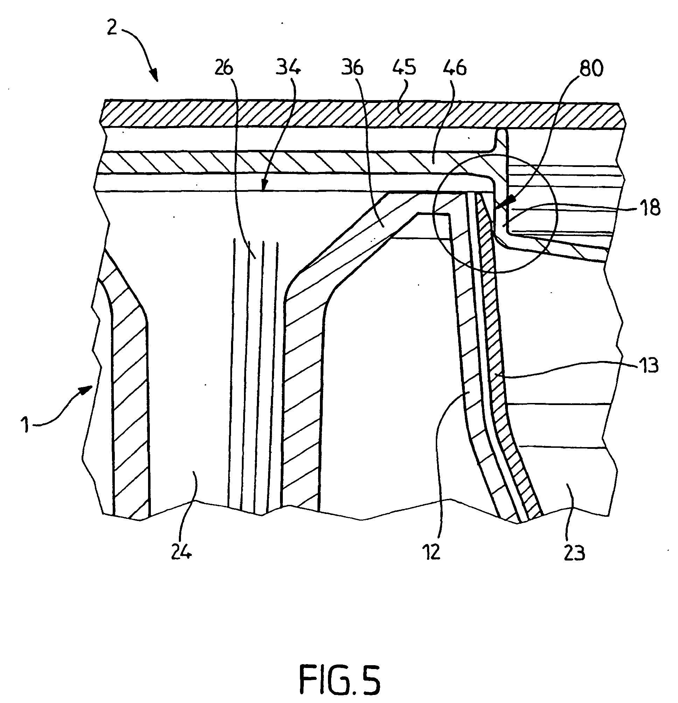

La figure 5 montre la partie supérieure de la cafetière dans la région du compartiment 23 de préparation de la boisson et du logement de filtres 24 recevant des filtres en papier 28, la douchette 14 n'étant pas représentée. Une zone annulaire de rétention d'eau 80 est agencée entre la partie supérieure du boîtier 1 et la partie inférieure du couvercle 2 autour du porte filtre 13. Le logement de filtres 24, le logement d'accessoire 22 et l'embouchure 21, visibles à la figure 2, sont agencés à l'extérieur de la zone annulaire de rétention d'eau 80.

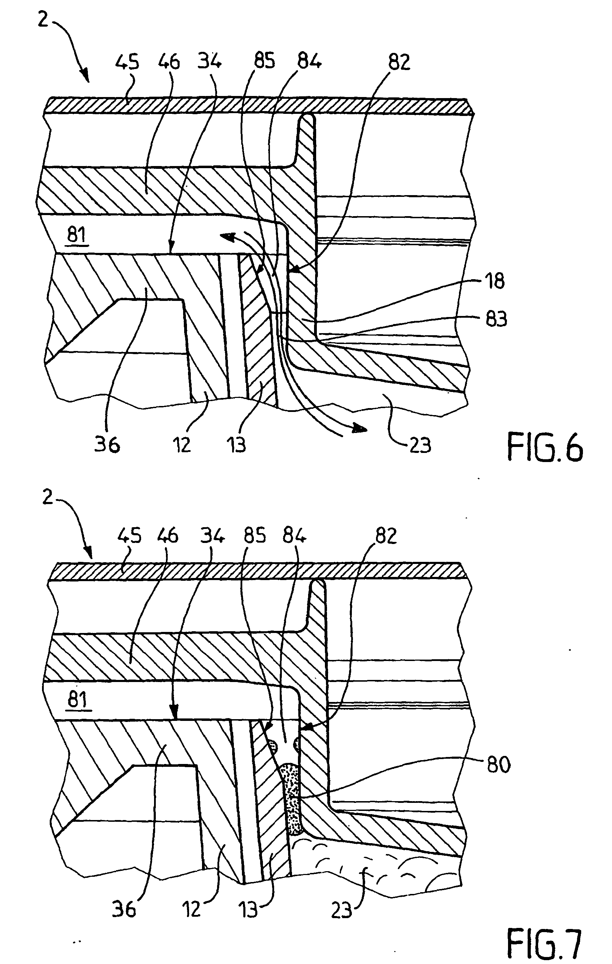

Tel que mieux visible aux figures 6 et 7, la zone annulaire de rétention d'eau 80 est ménagée entre le bossage inférieur 18 du couvercle 2 et la paroi intérieure du porte filtre 13. Lorsque le couvercle 2 est fermé, un jeu 81 subsiste entre la paroi supérieure 34 du boîtier 1 et la paroi inférieure 46 du couvercle 2. Le bossage 18 présente une forme épaulée cylindrique 82 pénétrant avec jeu dans la partie supérieure du logement de porte filtre 12 dans laquelle est placé le porte filtre 13.

Pour garantir une bonne adhésion des gouttelettes d'eau, le bossage inférieur 18 et/ou la partie supérieure du porte filtre 13 sont réalisées en matériau présentant une bonne mouillabilité, de préférence supérieure à 0,04 N/m. Des surfaces rugueuses, obtenues par exemple par grainage, ou encore dépolies, peuvent procurer une meilleure mouillabilité. Le porte filtre 13 est par exemple réalisé en polypropylène. La paroi inférieure 46 du couvercle 2 est par exemple réalisée en polycarbonate.

Une cheminée annulaire 83 est ainsi ménagée entre la forme épaulée cylindrique 82 du bossage 18 et la paroi intérieure du porte filtre 13. Une chambre de détente 84 est ménagée dans la partie supérieure de la cheminée annulaire 83. La chambre de détente 84 est obtenue avec un chanfrein 85 sur le sommet de la paroi intérieure du porte filtre 13.

La cafetière selon l'invention fonctionne de la manière suivante.

Lorsque le couvercle 2 occupe une position rabattue sur le boîtier 1, tel que représenté aux figures 1 et 3, l'ouverture d'entrée 15 de la douchette 14 est amenée en communication avec l'orifice de sortie d'eau chaude 11 du tube ascendant 10 et l'ouverture de sortie 16 de la douchette 14 débouche au dessus du logement de porte filtre 12. La protubérance inférieure 17 repousse le déflecteur mobile 51. Le joint à lèvres 35 agencé autour de l'ouverture d'entrée 15 coiffe l'extrémité supérieure 30 du conduit ascendant 10 comportant l'orifice 31. L'eau chaude issue du conduit ascendant 10 est transférée dans la douchette 14 sans écoulement dans le réservoir 8 grâce au joint à lèvres 35. L'eau chaude et la vapeur se séparent dans le conduit 69 et la chambre de sortie 70. L'eau chaude sort par l'ouverture 16. La vapeur issue de la chaudière 9 s'échappe par les passages de vapeur 73 pour rejoindre la chambre d'évacuation de vapeur 72. La vapeur issue du logement de porte filtre 12 rentre par les ouvertures d'entrée de vapeur 75 pour rejoindre la chambre d'évacuation de vapeur 72. La vapeur collectée dans la chambre d'évacuation de vapeur 72 sort par les ouvertures de sortie de vapeur 76.

Lorsque le couvercle 2 occupe une position relevée par rapport au boîtier 1, tel que représenté à la figure 2, l'extrémité supérieure du déflecteur mobile 51 se situe au niveau d'une paroi supérieure du boîtier 1. Le déflecteur mobile 51 est arrêtée par une butée annulaire chanfreinée 64 agencée entre l'extrémité supérieure 30 du conduit ascendant 10 et l'orifice 31. Cette disposition permet d'éviter l'écoulement de l'eau chaude hors du boîtier 1. L'eau chaude issue de l'orifice 31 s'écoule dans le puits 58. Les ouvertures 57 du capuchon 39 sont plus importantes que la section des languettes de retenue 55 et permettent le retour de l'eau dans le réservoir d'eau 8.

L'utilisateur peut ainsi relever le couvercle 2 sans risque de projections d'eau chaude. De plus l'orifice 31 de sortie d'eau chaude étant disposé en regard d'une paroi latérale 32 du boîtier 1, un défaut du déflecteur mobile 51 tel qu'un blocage en position basse n'est pas gênant pour la sécurité de l'appareil.

A titre de variante la face supérieure du boîtier 1 pourrait n'être formée que partiellement par le support 36.

A titre de variante le réservoir d'eau 8 peut être disposé hors du boîtier 1 et/ou être amovible par rapport au boîtier 1.

La présente invention n'est nullement limitée à l'exemple de réalisation décrit et à ses variantes, mais englobe de nombreuses modifications dans le cadre des revendications.

## Revendications

1. Cafetière filtre comportant une chaudière (9) agencée dans un boîtier (1) et reliée à un conduit ascendant (10) de montée d'eau chaude muni d'un orifice (31) de sortie d'eau chaude, un couvercle (2) articulé sur le boîtier (1), une douchette (14) agencée dans le couvercle (2), la douchette (14) comportant une ouverture d'entrée (15) amenée en communication avec l'orifice (31) et une ouverture de sortie (16) débouchant au dessus d'un porte filtre (13) lorsque le couvercle (2) occupe une position rabattue sur le boîtier (1), le couvercle (2) comportant une face inférieure présentant une protubérance inférieure (17) dans laquelle est ménagée l'ouverture d'entrée (15), **caractérisé en ce que** le conduit ascendant (10) comporte une extrémité supérieure (30) fermée en sa partie supérieure et **en ce que** l'orifice (31) débouche en regard d'une paroi latérale (32) appartenant au boîtier (1).

2. Cafetière filtre selon la revendication 1, **caractérisée en ce qu'**elle comporte un réservoir d'eau (8) alimentant la chaudière (9).

3. Cafetière filtre selon la revendication 2, **caractérisée en ce que** le réservoir d'eau (8) est agencé dans le boîtier (1).

4. Cafetière filtre selon la revendication 3, **caractérisée en ce que** le conduit ascendant (10) est disposé partiellement dans le réservoir d'eau (8).

5. Cafetière filtre selon l'une des revendications 1 à 4, **caractérisée en ce que** le porte filtre (13) est agencé dans le boîtier (1),

6. Cafetière filtre selon l'une des revendications 1 à 5, **caractérisée en ce que** le conduit ascendant (10) présente une paroi interne supérieure (33) inclinée vers le bas en direction de l'orifice (31).

7. Cafetière filtre selon l'une des revendications 1 à 6, **caractérisée en ce que** l'extrémité supérieure (30) du conduit ascendant (10) se situe au niveau d'une paroi supérieure (34) du boîtier (1).

8. Cafetière filtre selon l'une des revendications 1 à 7, **caractérisée en ce que** la protubérance inférieure (17) comporte un joint à lèvres (35) agencé autour de l'ouverture d'entrée (15) et coiffant le sommet du conduit ascendant (10) comportant l'orifice (31), lorsque le couvercle (2) occupé une position rabattue sur le boîtier (1).

9. Cafetière filtre selon l'une des revendications 1 à 8, **caractérisé en ce que** le boîtier (1) présente une face supérieure formée au moins partiellement par un support (36).

10. Cafetière filtre selon l'une des revendications 1 à 9, **caractérisé en ce que** l'orifice (31) est réalisé dans un capuchon (39) solidaire du boîtier (1), le capuchon (39) étant monté sur un tube de montée d'eau chaude (40), le capuchon (39) et le tube de montée d'eau chaude (40) appartenant au conduit ascendant (10).

11. Cafetière filtre selon l'une des revendications 1 à 8, **caractérisé en ce que** l'orifice (31) est réalisé dans un capuchon (39) solidaire du boîtier (1), le capuchon (39) étant monté sur un tube de montée d'eau chaude (40), le capuchon (39) et le tube de montée d'eau chaude (40) appartenant au conduit ascendant (10), le boîtier (1) présentant une face supérieure formée au moins partiellement par un support (36) auquel appartient la paroi latérale statique (32), le capuchon (39) étant fixé au support (36).

12. Cafetière filtre selon l'une des revendications 1 à 11, **caractérisé en ce qu'**un déflecteur mobile (51) est monté contre un moyen de rappel (52) autour de l'extrémité supérieure (30) du conduit ascendant (10).

13. Cafetière filtre selon l'une des revendications 1 à 9, **caractérisé en ce que** l'orifice (31) est réalisé dans un capuchon (39) solidaire du boîtier (1), le capuchon (39) étant monté sur un tube de montée d'eau chaude (40), le capuchon (39) et le tube de montée d'eau chaude (40) appartenant au conduit ascendant (10), un déflecteur mobile (51) étant monté contre un moyen de rappel (52) autour du capuchon (39).

14. Cafetière filtre selon l'une des revendications 1 à 9, **caractérisé en ce que** l'orifice (31) est réalisé dans un capuchon (39) solidaire du boîtier (1), le capuchon (39) étant monté sur un tube de montée d'eau chaude (40), le capuchon (39) et le tube de montée d'eau chaude (40) appartenant au conduit ascendant (10), le boîtier (1) présentant une face supérieure formée au moins partiellement par un support (36) auquel appartient la paroi latérale (34), le capuchon (39) étant fixé au support (36), un déflecteur mobile (51) étant monté contre un moyen de rappel (52) autour du capuchon (39).

15. Cafetière filtre selon l'une des revendications 12 à 14, **caractérisé en ce que** l'extrémité supérieure du déflecteur mobile (51) se situe au niveau d'une paroi supérieure (34) du boîtier (1).

16. Cafetière filtre selon l'une des revendications 9, 11 ou 14, **caractérisé en ce que** le support (36) présente un puits (59) dans lequel est agencé l'extrémité supérieure (30) du conduit ascendant (10).

17. Cafetière filtre selon l'une des revendications 9, 11, 14 ou 16, **caractérisée en ce que** la paroi latérale (32) appartient au support (36).

18. Cafetière filtre selon l'une des revendications 10, 11, 13 ou 14, **caractérisé en ce que** le capuchon (39) comporte une paroi (60) plongeant dans le réservoir d'eau (8) et présentant une découpe (61) dans laquelle coulisse une languette (62) appartenant à un flotteur (63) monté autour du tube de montée d'eau chaude (40).

19. Cafetière filtre selon l'une des revendications 1 à 18, **caractérisé en ce que** l'orifice (31) est agencé du côté de l'articulation du couvercle (2) sur le boîtier (1).

20. Cafetière filtre selon l'une des revendications 1 à 19, **caractérisé en ce que** la distance entre l'orifice (31) et la paroi latérale (32) est inférieure à 1 cm, et de préférence inférieure à 0,7 cm.

## Patentansprüche

1. Filterkaffeemaschine mit einem Wasserkessel (9), der in einem Gehäuse (1) angeordnet und mit einem Steigrohr (10) zum Führen des Warmwassers nach oben verbunden ist, das mit einer Warmwasser-Auslassöffnung (31) versehen ist, mit einem am Gehäuse (1) angelenkten Deckel (2), einer kleinen Brause (14), die im Deckel (2) angeordnet ist, wobei die kleine Brause (14) eine Einlassöffnung (15), die mit der Öffnung (31) verbunden ist, und eine Auslassöffnung (16) aufweist, die oberhalb eines Filterträgers (13) mündet, wenn der Deckel (2) eine auf das Gehäuse (1) heruntergeklappte Stellung einnimmt, wobei der Deckel (2) eine untere Seite umfasst, die eine untere Verdickung (17) aufweist, in der die Einlassföffnung (15) eingebracht ist, **dadurch gekennzeichnet, dass** das Steigrohr (10) ein an seinem oberen Teil geschlossenes oberes Ende (30) aufweist, und dass die Öffnung (31) gegenüber einer Seitenwand (32) mündet, die dem Gehäuse (1) gehört.

2. Filterkaffeemaschine nach Anspruch 1, **dadurch gekennzeichnet, dass** sie einen Wasserbehälter (8) aufweist, der den Wasserkessel (9) speist.

3. Filterkaffeemaschine nach Anspruch 2, **dadurch gekennzeichnet, dass** der Wasserbehälter (8) innerhalb des Gehäuses (1) angeordnet ist.

4. Filterkaffeemaschine nach Anspruch 3, **dadurch gekennzeichnet, dass** das Steigrohr (10) teilweise im Wasserbehälter (8) angeordnet ist.

5. Filterkaffeemaschine nach einem der Ansprüche 1 bis 4, **dadurch gekennzeichnet, dass** der Filterträger (13) innerhalb des Gehäuses (1) angeordnet ist.

6. Filterkaffeemaschine nach einem der Ansprüche 1 bis 5, **dadurch gekennzeichnet, dass** das Steigrohr (10) eine obere Innenwand (33) aufweist, die nach unten in Richtung der Öffnung (31) geneigt ist.

7. Filterkaffeemaschine nach einem der Ansprüche 1 bis 6, **dadurch gekennzeichnet, dass** das obere Ende (30) des Steigrohrs (10) auf der Höhe einer oberen Wand (34) des Gehäuses (1) liegt.

8. Filterkaffeemaschine nach einem der Ansprüche 1 bis 7, **dadurch gekennzeichnet, dass** die untere Verdickung (17) eine Lippendichtung (35) aufweist, die um die Einlassöffnung (15) herum angeordnet ist und den die Öffnung (31) aufweisenden Oberteil des Steigrohrs (10) überdeckt, wenn der Deckel (2) eine auf das Gehäuse (1) heruntergeklappte Stellung einnimmt.

9. Filterkaffeemaschine nach einem der Ansprüche 1 bis 8, **dadurch gekennzeichnet, dass** das Gehäuse (1) eine obere Seite aufweist, die wenigstens teilweise durch einen Träger (36) gebildet ist.

10. Filterkaffeemaschine nach einem der Ansprüche 1 bis 9, **dadurch gekennzeichnet, dass** die Öffnung (31) in einer mit dem Gehäuse (1) fest verbundenen Kappe (39) eingebracht ist, wobei die Kappe (39) an einem Rohr (40) zum Führen des Warmwassers nach oben angebracht ist, wobei die Kappe (39) und das Rohr (40) zum Führen des Warmwassers nach oben dem Steigrohr (10) gehören.

11. Filterkaffeemaschine nach einem der Ansprüche 1 bis 8, **dadurch gekennzeichnet, dass** die Öffnung (31) in einer mit dem Gehäuse (1) fest verbundenen Kappe (39) eingebracht ist, wobei die Kappe (39) an einem Rohr (40) zum Führen des Warmwassers nach oben angebracht ist, wobei die Kappe (39) und das Rohr (40) zum Führen des Warmwassers nach oben dem Steigrohr (10) gehören, wobei das Gehäuse (1) eine obere Seite aufweist, die wenigstens teilweise durch einen Träger (36) gebildet ist, dem die statische Seitenwand (32) gehört, wobei die Kappe (39) mit dem Träger (36) befestigt ist.

12. Filterkaffeemaschine nach einem der Ansprüche 1 bis 11, **dadurch gekennzeichnet, dass** ein bewegliches Umlenkblech (51) gegen ein Rückstellmittel (52) um das obere Ende (30) des Steigrohrs (10) angebracht ist.

13. Filterkaffeemaschine nach einem der Ansprüche 1 bis 9, **dadurch gekennzeichnet, dass** die Öffnung (31) in einer mit dem Gehäuse (1) fest verbundenen Kappe (39) eingebracht ist, wobei die Kappe (39) an einem Rohr (40) zum Führen des Warmwassers nach oben angebracht ist, wobei die Kappe (39) und das Rohr (40) zum Führen des Warmwassers nach oben dem Steigrohr (10) gehören, wobei ein bewegliches Umlenkblech (51) gegen ein Rückstellmittel (52) um die Kappe (39) angebracht ist.

14. Filterkaffeemaschine nach einem der Ansprüche 1 bis 9, **dadurch gekennzeichnet, dass** die Öffnung (31) in einer mit dem Gehäuse (1) fest verbundenen Kappe (39) eingebracht ist, wobei die Kappe (39) an einem Rohr (40) zum Führen des Warmwassers nach oben angebracht ist, wobei die Kappe (39) und das Rohr (40) zum Führen des Warmwassers nach oben dem Steigrohr (10) gehören, wobei das Gehäuse (1) eine obere Seite aufweist, die wenigstens teilweise durch einen Träger (36) gebildet ist, dem die Seitenwand (34) gehört, wobei die Kappe (39) mit dem Träger (36) befestigt ist, wobei ein bewegliches Umlenkblech (51) gegen ein Rückstellmittel (52) um die Kappe (39) angebracht ist.

15. Filterkaffeemaschine nach einem der Ansprüche 12 bis 14, **dadurch gekennzeichnet, dass** das obere Ende des beweglichen Umlenkblechs (51) auf der Höhe einer oberen Wand (34) des Gehäuses (1) liegt.

16. Filterkaffeemaschine nach einem der Ansprüche 9, 11 oder 14, **dadurch gekennzeichnet, dass** der Träger (36) einen Schacht (59) aufweist, in welchem das obere Ende (30) des Steigrohrs (10) angeordnet ist.

17. Filterkaffeemaschine nach einem der Ansprüche 9, 11, 14 oder 16, **dadurch gekennzeichnet, dass** die Seitenwand (32) dem Träger (36) gehört.

18. Filterkaffeemaschine nach einem der Ansprüche 10, 11, 13 oder 14, **dadurch gekennzeichnet, dass** die Kappe (39) eine Wand (60) aufweist, die in den Wasserbehälter eintaucht (8) und einen Ausschnitt (61) aufweist, in welcher eine Lasche gleitet, die einem Schwimmer (63) gehört, der um das Rohr zum Führen des Wassers nach oben (40) herum angebracht ist.

19. Filterkaffeemaschine nach einem der Ansprüche 1 bis 18, **dadurch gekennzeichnet, dass** die Öffnung (31) auf der Seite der Anlenkung des Deckels (2) am Gehäuse (1) angeordnet ist.

20. Filterkaffeemaschine nach einem der Ansprüche 1 bis 19, **dadurch gekennzeichnet, dass** der Abstand zwischen der Öffnung (31) und der Seitenwand (32) kleiner als 1 cm und vorzugsweise kleiner als 0,7 cm ist.

## Claims

1. A filter coffee machine comprising a boiler (9) arranged in a housing (1) and connected to a hot water riser duct (10) provided with a hot water outlet orifice (31), a lid (2) hinged to the housing (1), a spray head (14) arranged in the lid (2), the spray head (14) having an inlet opening (15) brought into communication with the orifice (31), and an outlet opening (16) that opens out above a filter holder (13) when the lid (2) is in the down position in which it is against housing (1), the lid (2) having a bottom face presenting a bottom protuberance (17) in which the inlet opening (15) is provided, said filter coffee machine being **characterized in that** the riser duct (10) has a top end (30) that is closed at its top portion, and **in that** the orifice (31) opens out facing a side wall (32) belonging to the housing (1).

2. A filter coffee machine according to claim 1, **characterized in that** it further comprises a water reservoir (8) feeding the boiler (9).

3. A filter coffee machine according to claim 2, **characterized in that** the water reservoir (8) is arranged inside the housing (1).

4. A filter coffee machine according to claim 3, **characterized in that** the riser duct (10) is disposed in part in the water reservoir (8).

5. A filter coffee machine according to any one of claims 1 to 4, **characterized in that** the filter holder (13) is arranged inside the housing (1).

6. A filter coffee machine according to any one of claims 1 to 5, **characterized in that** the riser duct (10) presents a top inside wall (33) sloping downwards towards the orifice (31).

7. A filter coffee machine according to any one of claims 1 to 6, **characterized in that** the top end (30) of the riser duct (10) is situated at the same level as a top wall (34) of the housing (1).

8. A filter coffee machine according to any one of claims 1 to 7, **characterized in that** the bottom protuberance (17) has a lip gasket (35) arranged around the inlet opening (15) and capping the top of the riser duct (10) having the orifice (31), when the lid (2) is in a down position in which it is against the housing (1).

9. A filter coffee machine according to any one of claims 1 to 8, **characterized in that** the housing (1) presents a top face formed at least in part by a support (36).

10. A filter coffee machine according to any one of claims 1 to 9, **characterized in that** the orifice (31) is provided in a cap (39) secured to the housing (1), the cap (39) being mounted on a hot water riser tube (40), the cap (39) and the hot water riser tube (40) belonging to the riser duct (10).

11. A filter coffee machine according to any one of claims 1 to 8, **characterized in that** the orifice (31) is provided in a cap (39) secured to the housing (1), the cap (39) being mounted on a hot water riser tube (40), the cap (39) and the hot water riser tube (40) belonging to the riser duct (10), the housing (1) presenting a top face formed at least in part by a support (36) to which the static side wall (32) belongs, the cap (39) being fastened to the support (36).

12. A filter coffee machine according to any one of claims 1 to 11, **characterized in that** a moving deflector (51) is mounted against return means (52) around the top end (30) of the riser duct (10).

13. A filter coffee machine according to any one of claims 1 to 9, **characterized in that** the orifice (31) is provided in a cap (39) secured to the housing (1), the cap (39) being mounted on a hot water riser tube (40), the cap (39) and the hot water riser tube (40) belonging to the riser duct (10), a moving deflector (51) being mounted against return means (52) about the cap (39).

14. A filter coffee machine according to any one of claims 1 to 9, **characterized in that** the orifice (31) is provided in a cap (39) secured to the housing (1), the cap (39) being mounted on a hot water riser tube (40), the cap (39) and the hot water riser tube (40) belonging to the riser duct (10), the housing (1) presenting a top face formed at least in part by a support (36) to which the side wall (34) belongs, the cap (39) being fastened to the support (36), a moving deflector (51) being mounted against return means (52) around the cap (39).

15. A filter coffee machine according to any one of claims 12 to 14, **characterized in that** the top end of the moving deflector (51) is situated at the same level as a top wall (34) of the housing (1).

16. A filter coffee machine according to claim 9, claim 11, or claim 14, **characterized in that** the support (36) presents a well (59) in which the top end (30) of the riser duct (10) is arranged.

17. A filter coffee machine according to claim 9, claim 11, claim 14, or claim 16, **characterized in that** the side wall (32) belongs to the support (36).

18. A filter coffee machine according to claim 9, claim 11, claim 14, or claim 16, **characterized in that** the cap (39) has a wall (60) extending into the water reservoir (8) and presenting a cutout (61) which slidably receives a tongue (62) belonging to a float (63) mounted around the hot water riser tube (40).

19. A filter coffee machine according to any one of claims 1 to 18, **characterized in that** the orifice (31) is arranged on the same side as the hinge mounting via which the lid (2) is hinged to the housing (1).

20. A filter coffee machine according to any one of claims 1 to 19, **characterized in that** the distance between the orifice (31) and the side wall (32) is less than 1 cm, and is preferably less than 0.7 cm.
